(19) Europäisches Patentamt
European Patent Office
Office européen des brevets

(11) EP 4 737 713 A1

(12) **EUROPEAN PATENT APPLICATION**
published in accordance with Art. 153(4) EPC

(43) Date of publication:
**06.05.2026 Bulletin 2026/19**

(21) Application number: **23943443.4**

(22) Date of filing: **20.12.2023**

(51) International Patent Classification (IPC):
***F03D 13/20*** *(2016.01)*

(52) Cooperative Patent Classification (CPC):
Y02E 10/72; Y02E 10/727

(86) International application number:
**PCT/CN2023/140342**

(87) International publication number:
**WO 2025/000970 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.06.2023 CN 202310816270**

(71) Applicants:
- **GOLDWIND SCIENCE & TECHNOLOGY CO., LTD.
Xinjiang 830026 (CN)**
- **Beijing Goldwind Science & Creation Windpower Equipment Co. Ltd.
Beijing 100176 (CN)**

(72) Inventors:
- **ZHAI, Endi
Beijing 100176 (CN)**
- **GAO, Yang
Beijing 100176 (CN)**
- **XU, Zhiliang
Beijing 100176 (CN)**
- **ZHANG, Guoming
Beijing 100176 (CN)**

(74) Representative: **Hoffmann Eitle
Patent- und Rechtsanwälte PartmbB
Arabellastraße 30
81925 München (DE)**

# (54) WIND TURBINE FOUNDATION, WIND TURBINE GENERATOR SYSTEM AND CONTROL METHOD

(57) The present application relates to a wind turbine foundation, a wind turbine generator system and a control method. The wind turbine foundation is capable of being arranged in seawater and configured to support a tower, wherein the wind turbine foundation includes: floating bodies, wherein a number of the floating bodies is n, the floating bodies are arranged at intervals from each other, and lines connecting centers of the floating bodies form a polygon as a whole, where $n \geq 3$; connecting bodies, wherein a corresponding one of the connecting bodies is connected between every two adjacent floating bodies; wherein each of the floating bodies has a static chamber and a dynamic chamber that are independently arranged, a first medium is enclosed within the static chamber, each of the floating bodies is provided with a first opening connected to the dynamic chamber and a first control valve, and the first control valve controls opening and closing of the first opening to adjust a volume of the seawater entering the dynamic chamber. According to the wind turbine foundation, wind turbine generator system and control method provided in the embodiments of the present application, the wind turbine foundation has a fast response speed and a good stability effect.

213
211
218
216
219
A
A
214
W
212
215

Fig. 4

EP 4 737 713 A1

## Description

### CROSS-REFERENCE TO RELATED APPLICATIONS

This application claims priority to Chinese Patent Application No. 202310816270.9 filed on June 29, 2023, which is hereby incorporated by reference in its entirety.

### TECHNICAL FIELD

The present application relates to the technical field of wind power, and in particular to a wind turbine foundation, a wind turbine generator system and a control method.

### BACKGROUND

The wind power industry continues to contribute to the achievement of dual-carbon goals. Currently, wind turbine generator systems are developing toward larger single-unit capacity, lighter overall weight, intelligentization, and offshore applications. According to statistics, the cumulative installed capacity of offshore wind power is increasing year by year. With the large-scale development of nearshore resources, the development and utilization of deep-sea resources have attracted significant attention. Within this industry scenario, floating-type wind turbine generator systems are gradually being developed and will become a major contributor to the subsequent development of offshore wind power.

A wind turbine foundation is used to support components, such as a tower, a nacelle etc., of a floating-type wind turbine generator system. When the wind turbine generator system faces wind loads, wave loads, ocean current loads, ice loads, etc., from the perspective of overall dynamics, the wind turbine foundation has six degrees of freedom in all directions, due to the "floating" characteristics of the floating-type wind turbine generator system. Under intertwined coupling of external load randomness and the complexity of the wind turbine generator system’s own motion, the overall non-linear characteristics of the floating-type wind turbine generator system become more complex. The motion stability of the floating-type wind turbine generator system is one of the most important indicators to ensure continuous, stable, safe and efficient output of the wind turbine generator system and to ensure power generation. Therefore, how to ensure the stability of the floating-type wind turbine generator system is one of the problems that need to be urgently solved in the wind power field.

The wind turbine foundation in related art mainly adjusts an overall inclination angle of the wind turbine foundation by controlling mutual flow of fluids between different floating bodies, so as to ensure the stability of the floating-type wind turbine generator system where the wind turbine foundation is located. However, this design method makes an overall displacement of the wind turbine foundation unchanged, resulting in slow response speed and poor stability effect.

### SUMMARY

Embodiments of the present application provide a wind turbine foundation, a wind turbine generator system and a control method. The wind turbine foundation has a fast response speed and a good stability effect.

In one aspect, embodiments of the present application provide a wind turbine foundation, capable of being arranged in seawater and configured to support a tower, wherein the wind turbine foundation includes: floating bodies, wherein a number of the floating bodies is n, the floating bodies are arranged at intervals from each other, and lines connecting centers of the floating bodies form a polygon as a whole, where $n \geq 3$; connecting bodies, wherein a corresponding one of the connecting bodies is connected between every two adjacent floating bodies; wherein each of the floating bodies has a static chamber and a dynamic chamber that are independently arranged, a first medium is enclosed within the static chamber, each of the floating bodies is provided with a first opening connected to the dynamic chamber and a first control valve, and the first control valve controls opening and closing of the first opening to adjust a volume of the seawater entering the dynamic chamber.

In another aspect, embodiments of the present application provide a wind turbine generator system, including: the wind turbine foundation described above; a wind turbine main body arranged on one of the floating bodies, wherein the wind turbine main body includes the tower connected to the floating body, a nacelle arranged on the tower, and an impeller arranged on the nacelle.

In yet another aspect, embodiments of the present application provide a control method for the wind turbine generator system described above, including: acquiring current power information of the wind turbine generator system; acquiring, under a condition that the current power information continuously exceeds a first threshold for a preset time period, inclination angle information of the wind turbine foundation; determining, under a condition that the inclination angle information exceeds a preset range, a target floating body that needs to be adjusted based on the inclination angle information, a direction of incoming wind, and target posture information corresponding to a target posture to be adjusted to; and adjusting a volume of seawater within the target floating body until the wind turbine foundation reaches the target posture.

According to the wind turbine foundation, wind turbine generator system, and control method provided in the embodiments of the present application, the wind turbine foundation includes three or more floating bodies and connecting bodies. Lines connecting centers of the three or more floating bodies form a polygon. A corresponding one of the connecting bodies is connected between every two adjacent floating bodies. The floating bodies are connected as a whole through the connecting bodies. Each of the floating bodies includes a static chamber and a dynamic chamber that are independently arranged, and a first medium is arranged within the static chamber, which gives the wind turbine foundation a certain initial load-bearing capacity. Each of the floating bodies is provided with a first opening connected to the dynamic chamber and a first control valve. Under a condition that it is necessary to adjust a displacement of any floating body among the plurality of floating bodies, the first opening can be directly controlled to be open through the first control valve to adjust a volume of seawater in the dynamic chamber of the floating body. This can quickly change a weight of a single floating body and a displacement of the entire wind turbine foundation, so as to quickly respond to influences of wind loads, wave loads, ocean current loads, ice loads, etc. On the basis of ensuring the overall stability of the wind turbine foundation and the wind turbine generator system where the wind turbine foundation is located, this ensures that the overall response speed of the wind turbine foundation is fast, and a change of the displacement of the wind turbine foundation can adapt to the influences of different external factors, resulting in a good stability effect.

## BRIEF DESCRIPTION OF THE DRAWINGS

The features, advantages and technical effects of exemplary embodiments of the present application will be described below with reference to the accompanying drawings.

Fig. 1 is a schematic structural diagram of a wind turbine generator system according to an embodiment of the present application;
Fig. 2 is a schematic diagram of degrees of freedom of motion of a wind turbine foundation according to an embodiment of the present application;
Fig. 3 is a schematic structural diagram of a wind turbine foundation according to an embodiment of the present application;
Fig. 4 is a schematic structural diagram of a floating body according to an embodiment of the present application;
Fig. 5 is a cross-sectional view taken along the A-A direction in Fig. 4;
Fig. 6 is a schematic structural diagram of a floating body according to another embodiment of the present application;
Fig. 7 is a cross-sectional view taken along the B-B direction in Fig. 6;
Fig. 8 is a hydraulic diagram of a wind turbine foundation according to an embodiment of the present application ;
Fig. 9 is a flow chart of a control method according to an embodiment of the present application;
Fig. 10 is a control logic diagram of a control method according to an embodiment of the present application;
Figs. 11 to 14 are schematic diagrams of different incoming wind directions according to an embodiment of the present application.

In the drawings:

100-Wind turbine body; 10-Tower; 20-Nacelle; 30-Generator; 40-Impeller; 41-Hub; 42-Blade;
50-Mooring system; 60-Seabed;
200-Wind turbine foundation; 210-Floating body; 211-Static chamber; 212-First medium; 213-Dynamic chamber; 214-First opening; 215-First control valve; 216-Gas pipe; 217-Compressor;
218-Second control valve; 219-Seawater; 221-Flow meter; 222-Pressure gauge; W-Radial direction; 223-Filter; 220-Connecting body;
210a-First auxiliary floating body; 210b-Second auxiliary floating body; 210c-Third auxiliary floating body.

In the drawings, the same components are labeled with the same reference numerals. The drawings are not drawn to an actual scale.

## DETAILED DESCRIPTION

The features and exemplary embodiments of various aspects of the present application will be described in detail below. In the detailed description below, many specific details are set forth in order to provide a comprehensive understanding of the present application. However, it will be apparent to those skilled in the art that the present application can be implemented without some of these specific details. The following description of the embodiments is merely intended to provide a better understanding of the present application by illustrating examples of the present application. In the accompanying drawings and the following description, at least some of the well-known structures and technologies are not shown in order to avoid unnecessary ambiguity in the present application. Furthermore, for clarity, sizes of some structures may be exaggerated. In addition, the features, structures, or characteristics described below may be combined in any suitable manner in one or more embodiments.

Directional terms used in the following description refer to directions shown in the figures and are not intended to limit specific structures of the wind turbine foundation, wind turbine generator system, and control method of the present application. It should also be noted that, unless otherwise specified or limited, the terms "installation" and "connection" should be interpreted broadly, meaning, for example, a fixed connection, a detachable connection, or an integrated connection; a direct connection or an indirect connection. Those skilled in the art will understand specific meanings of these terms in the present application based on specific circumstances.

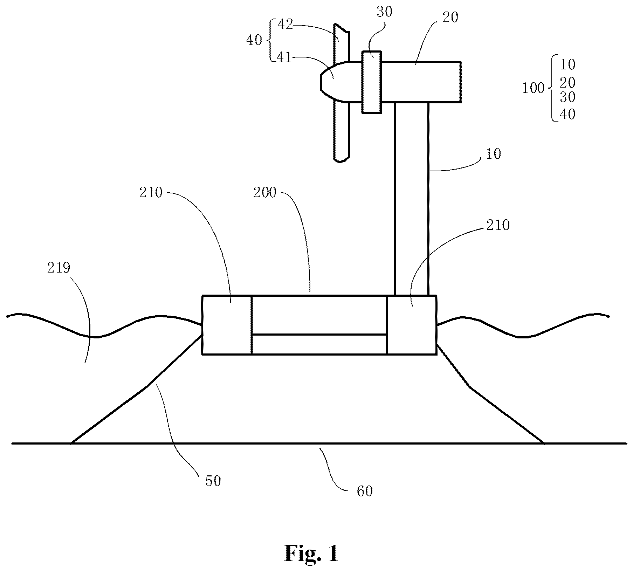

As shown in Fig. 1, the embodiments of the present application provide a wind turbine generator system, which includes a wind turbine foundation 200 and a wind turbine body 100. The wind turbine body 100 includes a tower 10, a nacelle 20, a generator 30, and an impeller 40. The tower 10 is connected to the wind turbine foundation 200, the nacelle 20 is arranged at the top of the tower 10, and the generator 30 is arranged at the nacelle 20. In some examples, the generator 30 may be located outside the nacelle 20, or in other examples, the generator 30 may also be located inside the nacelle 20. The impeller 40 includes a hub 41 and a plurality of blades 42 connected to the hub 41. The impeller 40 is connected to a rotor of the generator 30 via the hub 41, thereby driving the rotor to rotate relative to a stator, to achieve a power generation demand of the wind turbine generator system. The wind turbine foundation 200 floats in the seawater, and in order to limit its range of motion, it is anchored to the seabed 60 via a mooring system 50, thereby constraining its range of motion.

Due to huge differences between the floating-type wind turbine generator system and an onshore wind turbine generator system or an offshore monopile-fixed wind turbine generator system, the floating-type wind turbine generator system has its own unique floating body and mooring system in terms of the overall system composition.

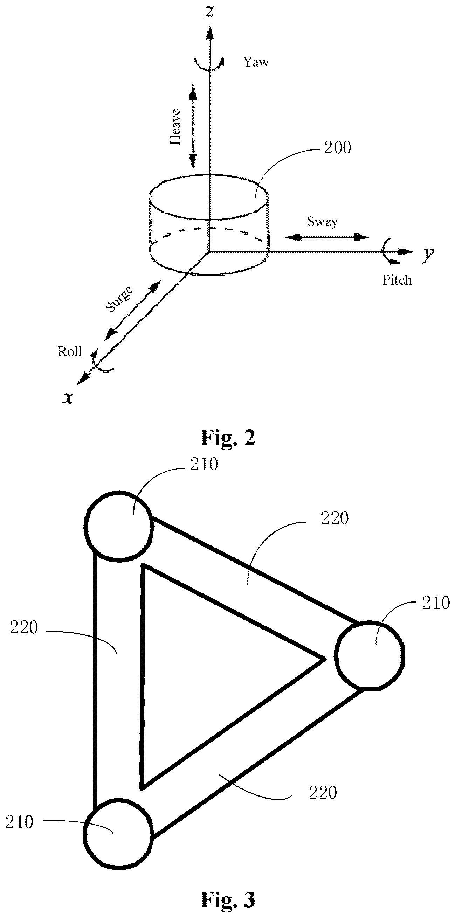

As shown in Fig. 2, from the perspective of external loads, the wind turbine foundation 200 as a whole faces wind loads, wave loads, ocean current loads, ice loads, etc., and from the perspective of overall dynamics, the wind turbine foundation and the wind turbine generator system where the wind turbine foundation is located have six degrees of freedom in all directions, due to the "floating" characteristics of the floating-type wind turbine generator system. Three translational degrees of freedom include surge, sway, and heave, and three rotational degrees of freedom include roll, pitch, and yaw. Under the influence of external random loads input and coupling of multiple systems in the wind turbine generator system, motion characteristics and mechanisms of the floating-type wind turbine generator system become more complex.

Continuing to refer to Fig. 2, the motion stability of the floating-type wind turbine generator system is one of the most important indicators to ensure continuous, stable, safe, and efficient output of the wind turbine generator system and to ensure power generation. However, while the impeller 40 captures wind energy to generate rotational mechanical energy, it also synchronously generates a thrust in the same direction as the incoming wind. This force is transmitted to the wind turbine foundation 200, causing the wind turbine generator system to generate an elevation angle in the y direction of rotation in Fig. 2, resulting in an included angle between the impeller of the wind turbine generator system and the incoming wind direction. According to equation (1), the power generation P is proportional to A. The existence of the elevation angle will reduce A, thereby reducing the power generation of the wind turbine generator system.

$$P = \frac{1}{2}\rho A V^3 \qquad (1)$$

To improve the stability of the floating-type wind turbine generator system, a ballast control system for a floating wind turbine platform (i.e., a wind turbine foundation) has been proposed in related arts. This system consists of multiple stable columns with internal volumes for accommodating ballast (water) and a control system, and adjusts and controls the ballast among the multiple stable columns based on the incoming wind and a posture of the floating-type wind turbine generator system, thereby enabling the impeller of the wind turbine generator system to face the wind directly and reducing power generation losses. This allows for control of the posture of the floating-type wind turbine generator system, thereby optimizing the overall power generation.

However, during implementation and application, although this structural form of the wind turbine foundation can improve the stability of the floating-type wind turbine generator system to a certain extent, mutual linkage and adjustment of ballast water among the multiple stable columns with internal volumes for accommodating ballast (water) based on an incoming wind speed and the posture of the floating-type wind turbine generator system requires a large number of supporting hardware, such as pumps (several thousand cubic meters per hour), pipelines, and valves, etc. On one hand, it makes the structure complex, and on the other hand, it imposes high demands on system reliability and redundancy design. Once any component in the system fails, it will affect the performance and safety of the whole wind turbine.

Furthermore, from another perspective, a speed of the ballast water adjustment among different stable columns achieved through pumps and pipelines is extremely slow, typically between half an hour and an hour. This response speed of the system determines that the wind turbine generator system cannot match the incoming wind and wave loads in an optimal posture in most scenarios.

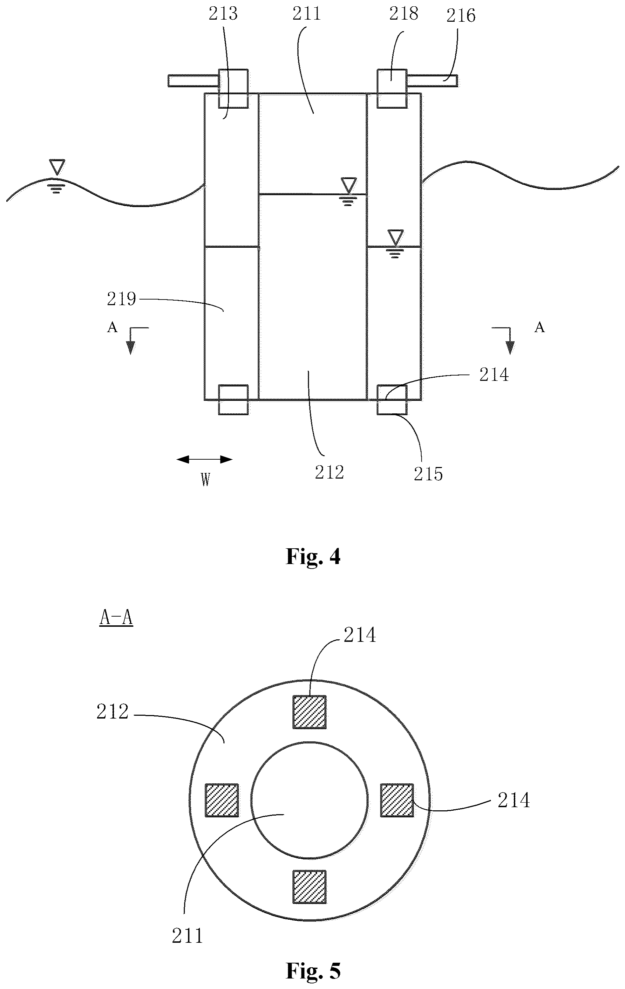

As shown in Figs. 3 to 5, based on the above context, the embodiments of the present application provide a new wind turbine foundation 200 capable of being arranged in seawater 219 and configured to support a tower 10. The wind turbine foundation includes floating bodies 210 and connecting bodies 220, wherein a number of the floating bodies 210 is n, the floating bodies 210 are arranged at intervals from each other, and lines connecting centers of the floating bodies 210 form a polygon as a whole, where $n \geq 3$, wherein a corresponding one of the connecting bodies 220 is connected between every two adjacent floating bodies 210. Each of the floating bodies 210 has a static chamber 211 and a dynamic chamber 213 that are independently arranged, and a first medium 212 is enclosed within the static chamber 211. Each of the floating bodies 210 is provided with a first opening 214 connected to the dynamic chamber 213 and a first control valve 215, and the first control valve 215 controls opening and closing of the first opening 214 to adjust a volume of the seawater 219 entering the dynamic chamber 213.

A value of the number n may be three, four, five, or even more. Line connecting centers of the floating bodies 210 may form a triangle, a quadrilateral, a pentagon, or other shape, optionally a regular polygon. The centers of the floating bodies 210 are located at vertices of the polygon.

For example, when the value of n is three, the lines connecting centers of the floating bodies 210 form a triangle, optionally a regular triangle. When the value of n is four, the lines connecting centers of the floating bodies 210 form a quadrilateral, optionally a regular quadrilateral. When the value of n is five, the lines connecting centers of the floating bodies 210 form a pentagon, optionally a regular pentagon.

Each floating body 210 may be cylindrical in shape as a whole. In a direction perpendicular to a sea level, or in an extension direction of the tower 10, a shape of an orthographic projection of each floating body 210 may be a regular geometric shape. The lines connecting centers of the floating bodies 210 form a polygon, which may also be understood as lines connecting centers of orthographic projections of the floating bodies 210 forming a polygon.

Optionally, the shape of the orthographic projection of each floating body 210 in the direction perpendicular to the sea level may be a circle, an ellipse, or a polygon. In the case of a polygon, it may optionally be a regular polygon.

The sea level may be understood as a surface of the seawater in a calm state without being affected by wind and waves.

Each connecting body 220 may be in a structural form of a connecting rod, a connecting plate, etc. A corresponding one of the connecting bodies 220 is connected between every two adjacent floating bodies 210. The connection between the connecting bodies 220 and the floating bodies 210 may be achieved using fasteners or may be of an integral structural form.

The number of n floating bodies 210 may be arranged at intervals and uniformly around a first axis. A corresponding one of the connecting bodies 220 is connected between every two adjacent floating bodies 210, and an extension length of each connecting body 220 between two adjacent floating bodies 210 may be equal.

The number of the dynamic chambers 213 and the number of the static chambers 211 included in each floating body 210 may be set according to adjustment requirements. For example, the number of the dynamic chambers 213 and the number of the static chambers 211 included in each floating body 210 may be equal, for example, both of them may be one, and of course, both of them may be two or more. In some embodiments, the number of the dynamic chambers 213 and the number of the static chambers 211 included in each floating body 210 may also be different, and one of them may be larger than the other. For example, each floating body 210 may include two dynamic chambers 213 and one static chamber 211, or may include two static chambers 211 and one dynamic chamber 213. Of course, the above is only an example and is not limited to the above quantity settings.

The first medium 212 within the static chamber 211 may be in a solid state or a liquid state. The first medium 212 is enclosed in the static chamber 211 and its weight in the static chamber 211 remains unchanged.

The dynamic chamber 213 may be connected to the seawater in a sea area through the first opening 214, so that the seawater 219 may enter the dynamic chamber 213 through the first opening 214, and may also flow out of the dynamic chamber 213 from the first opening 214. The first control valve 215 may control the opening and closing of the first opening 214.

The wind turbine foundation 200 provided in the embodiments includes three or more floating bodies 210 and connecting bodies 220. Lines connecting centers of the three or more floating bodies 210 form a polygon. A corresponding one of the connecting bodies 220 is connected between every two adjacent floating bodies 210. The floating bodies 210 are connected as a whole through the connecting bodies 220. When used for a wind turbine generator system, it allows one of the plurality of floating bodies 210 to be connected to the tower 10. Each of the floating bodies 210 includes a static chamber 211 and a dynamic chamber 213 that are independently arranged, and a first medium 212 is arranged within the static chamber 211. Each of the floating bodies 210 is provided with a first opening 214 connected to the dynamic chamber 213 and a first control valve 215. Under a condition that it is necessary to adjust a displacement of any floating body 210 among the plurality of floating bodies 210, the first opening 214 can be directly controlled to be open through the first control valve 215 to adjust a volume of seawater 219 in the dynamic chamber 213 of the floating body 210. This can quickly change a weight of a single floating body 210 and a displacement of the entire wind turbine foundation 200, so as to quickly respond to influences of wind loads, wave loads, ocean current loads, ice loads, etc., which is beneficial to the wind turbine foundation 200 facing a wind and capturing wind energy in a better posture under different loads. On the basis of ensuring the overall stability of the wind turbine foundation 200 and the wind turbine generator system where the wind turbine foundation 200 is located, this ensures that the overall response speed of the wind turbine foundation 200 is fast, and a change of the displacement of the wind turbine foundation 200 can adapt to the influences of different external factors, resulting in a good stability effect.

Furthermore, in the wind turbine foundation 200 provided in the embodiments of the present application, the static chamber 211 and the dynamic chamber 213 are independently arranged, and each dynamic chamber 213 is designed to be able to communicate with the seawater 219. This design allows for independent control of a single floating body 210, and passive coordination of the plurality of floating bodies 210 allows for an overall posture adjustment of the wind turbine foundation 200. There is no need to set connecting pipes, connecting valves, etc. between adjacent floating bodies 210, making an overall structure of the wind turbine foundation 200 simple and low-cost. Furthermore, the performance and safety of the entire wind turbine generator system will not be affected by damage to any of its components. For example, when one of the floating bodies 210 fails for a short period of time, the safety of the entire wind turbine generator system can be ensured by independently adjusting the volume of seawater in the dynamic chambers 213 of other floating bodies 210.

In some optional embodiments, in the wind turbine foundation 200 provided in the embodiments of the present application, one of the static chamber 211 and the dynamic chamber 213 is arranged around the other.

The static chamber 211 may be annular and arranged around the dynamic chamber 213. Of course, the dynamic chamber 213 may also be annular and arranged around the static chamber 211. Both the static chamber 211 and the dynamic chamber 213 may be hollow annular. Of course, one may be hollow annular and the other may be hollow columnar.

The wind turbine foundation 200 provided in the embodiments of the present application is arranged to make one of the dynamic chamber 213 and the static chamber 211 surround the other. Therefore, when the volume of the seawater 219 in the dynamic chamber 213 in each floating body 210 is adjusted, a pressure from the seawater 219 is ensured to be uniform at various locations, thereby ensuring the response speed and stability requirements of the wind turbine foundation 200 during posture adjustment.

In some optional embodiments, in the wind turbine foundation 200 provided in the embodiments of the present application, one of the dynamic chamber 213 and the static chamber 211 is an annular chamber and the other is a columnar chamber, and the dynamic chamber 213 and the static chamber 211 are arranged coaxially with each other.

The dynamic chamber 213 may be an annular chamber, and the static chamber 211 may be a columnar chamber. Of course, the dynamic chamber 213 may also be a columnar chamber, and the static chamber 211 may be an annular chamber. For example, the dynamic chamber 213 may be an annular chamber, and the static chamber 211 may be a columnar chamber.

The wind turbine foundation 200 provided in the embodiments of the present application can fully utilize an internal cavity of each floating body 210 by configuring one of the dynamic chamber 213 and the static chamber 211 as an annular chamber and the other as a cylindrical chamber, and arranging the two chambers coaxially. At the same time, it can effectively ensure that incoming seawater 219 quickly flows in the circumferential direction of each floating body 210, effectively ensuring uniform pressure from the seawater 219 at various parts of each floating body 210, and ensuring the response speed and stability requirements of the wind turbine foundation 200 during posture adjustment.

In some optional embodiments, in the wind turbine foundation 200 provided in the embodiments of the present application, each floating body 210 is in a shape of a hollow column as a whole, and the dynamic chamber 213 and the static chamber 211 are arranged alternately in a radial direction W of each floating body 210.

The static chamber 211 may be located in a center area of each floating body 210, and then the dynamic chamber 213 may be arranged around the static chamber 211. Of course, conversely, the dynamic chamber 213 may be located in the center area of each floating body 210, and then the static chamber 211 may be arranged around the dynamic chamber 213.

The wind turbine foundation 200 provided in the embodiments of the present application, through the above arrangement, can have two or more dynamic chambers 213. On the basis of equally sized floating bodies 210, the cavity inside the floating bodies 210 can be divided more finely, and a volume of the seawater 219 in the dynamic chamber 213 in a same floating body 210 can be individually controlled, which can further improve the response speed of the wind turbine foundation 200 during posture adjustment.

In some optional embodiments, in the wind turbine foundation 200 provided in the embodiments of the present application, the alternating distribution of the dynamic chamber 213 and the static chamber 211 in the radial direction W is only an optional implementation.

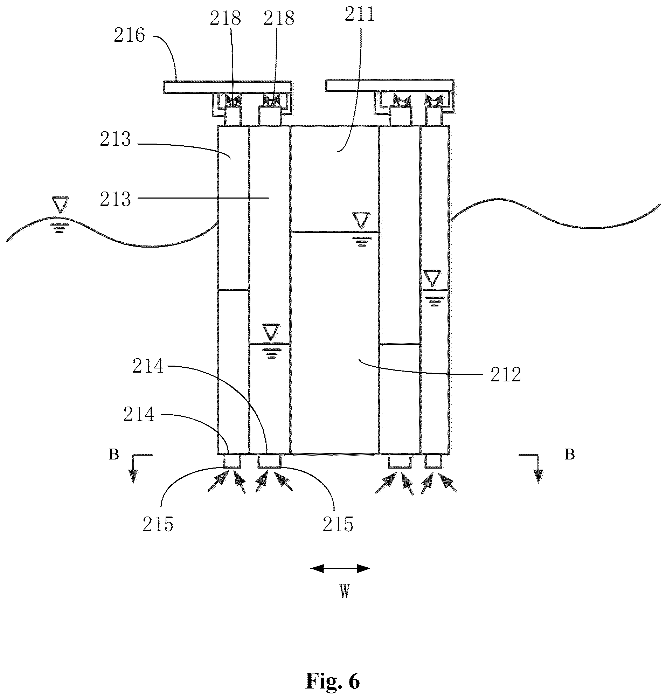

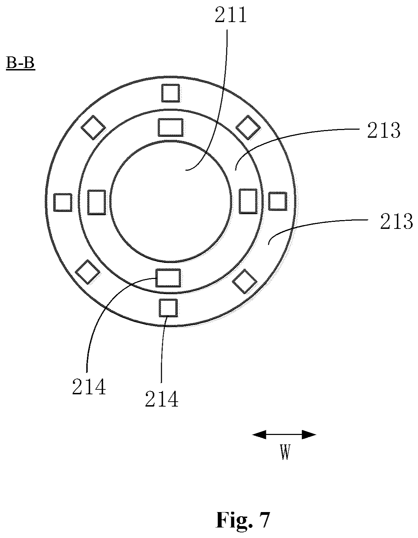

As shown in Figs. 6 and Figs. 7, in some embodiments, the number of the dynamic chambers 213 may be two or more, and the two or more dynamic chambers 213 are all arranged around the static chamber 211 and are independently distributed from each other.

For example, the static chamber 211 may be in a shape of a hollow column and located at the center of each floating body 210, and the two or more dynamic chambers 213 may be distributed in sequence along the radial direction W of each floating body 210 and are independently arranged from each other. Each dynamic chamber 213 is provided with a first opening 214 and a first control valve 215.

The wind turbine foundation 200 provided in the embodiments of the present application can increase a proportion of the dynamic chambers 213 by configuring the number of the dynamic chambers 213 to be two or more. Furthermore, the dynamic chambers 213 are arranged independently from each other, which can also divide the cavity inside the floating bodies 210 more finely. The volume of the seawater 219 in each dynamic chamber 213 in the same floating body 210 can be individually controlled, which can further improve the response speed of the wind turbine foundation 200 during posture adjustment.

Furthermore, the two or more embodiments proposed in the present application correspond to a logic of dividing the whole into multiple parts through a holistic segmentation approach, thereby enhancing dynamic characteristics of the entire system. Furthermore, due to limited mass of the system used for posture adjustment, the static chamber 211 is provided to ensure basic hydrodynamic characteristics of the system. At the same time, the arrangement of the dynamic chamber 213 can maximize dynamic characteristics of a medium within the dynamic chamber 213 through separation of the dynamic chamber and the static chamber, ensuring a corresponding speed of the wind turbine foundation 200 during posture adjustment.

In some optional embodiments, in the wind turbine foundation 200 provided in the embodiments of the present application, the first medium 212 includes at least one of a solid medium and a liquid medium.

The first medium 212 may include only a solid medium, or may include only a liquid medium. In some examples, it may include both a solid medium and a liquid medium.

The solid medium may include but is not limited to iron ore, stone, etc. The liquid medium may include but is not limited to the seawater 219, fresh water, etc.

The wind turbine foundation 200 provided in the embodiments of the present application can ensure support requirements of the wind turbine foundation 200 for components such as the tower 10 by configuring the first medium 212 to include one of a solid medium and a liquid medium. In addition, the above arrangement can also make a material selection range of the first medium 212 wide, and when a solid medium is used, it can also reduce corrosion protection requirements of the static chamber 211.

In the wind turbine foundation 200 provided in the embodiments of the present application, after the first control valve 215 of each floating body 210 is opened, each floating body 210 can utilize its own gravity to allow the seawater 219 to enter the dynamic chamber 213 through the first opening 214. Alternatively, the seawater 219 may be discharged from the first opening 214 by an external drive device such as a pump or a hydraulic motor, etc. This is only one implementation and is not limited to the above manner.

In some optional embodiments, the wind turbine foundation 200 provided in the embodiments of the present application may further include a compressor 217 and a gas pipe 216 connected to the compressor 217, and the dynamic chamber 213 of each floating body 210 is connected to the gas pipe 216.

When a corresponding floating body 210 needs to sink, a volume or weight of the seawater 219 in the dynamic chamber 213 needs to be increased to achieve this. At this time, the first control valve 215 can be opened, so that the first opening 214 is open, allowing the seawater 219 to enter through the first opening 214, and gas in the dynamic chamber 213 can enter the gas pipe 216 through an opening connecting the dynamic chamber 213 to the gas pipe 216. Optionally, when the first control valve 215 controls the first opening 214 to be open, a flow rate of the seawater 219 entering the dynamic chamber 213 can be controlled by varying an opening degree. After the dynamic chamber 213 is adjusted to a target water level, the water level in the dynamic chamber 213 can be maintained at a target position, and the first control valve 215 can be closed.

When the corresponding floating body 210 needs to float, the compressor 217 may be started, allowing high-pressure gas compressed by the compressor 217 to enter the dynamic chamber 213 through the gas pipe 216. After an accumulated gas pressure in the dynamic chamber 213 reaches a predetermined value, the first control valve 215 is opened. Since a pressure in the dynamic chamber 213 is greater than a pressure outside the floating body 210, under an action of a gas pressure difference, the seawater 219 in the dynamic chamber 213 will flow out of the dynamic chamber 213 through the first opening 214 and into the sea. When a volume or weight of remaining seawater 219 in the dynamic chamber 213 reaches a predetermined requirement, the first control valve 215 is controlled to close the first opening 214.

The wind turbine foundation 200 provided in the embodiments of the present application is provided with the compressor 217 and the gas pipe 216, so that the wind turbine foundation 200 itself can reliably discharge the seawater 219 in the dynamic chamber 213 by utilizing a principle of gas pressure difference, thereby effectively ensuring the response speed when the wind turbine foundation 200 adjusts its posture.

In addition, the present application constructs a dynamic ballast system based on an open circulation system, and combines the compressor 217 to provide a high-pressure gas source to adjust positions of the floating bodies 210 of the wind turbine foundation 200. Through easy-to-obtain implementation means and methods, a low-cost posture adjustment system is constructed, thereby reducing a weight of the floating body and reducing an electricity cost of the entire wind turbine.

In some optional embodiments, the wind turbine foundation 200 provided in the embodiments of the present application is provided with a second control valve 218 between each dynamic chamber 213 and the compressor 217 to adjust a flow rate of gas entering each dynamic chamber 213. The arrangement of the second control valve 218 facilitates control of other flows entering each dynamic chamber 213, thereby ensuring the accuracy and stability of posture adjustment of the wind turbine foundation 200.

In some optional embodiments, the wind turbine foundation 200 provided in the embodiments of the present application may have the compressor 217 connected to the floating bodies 210, or alternatively, to the connecting bodies 220. Each floating body 210 may be provided with a corresponding compressor 217, and each dynamic chamber 213 of the same floating body 210 may be connected to the same compressor 217. A flow rate of compressed gas acquired by each dynamic chamber 213 from the compressor 217 may be controlled by the second control valve 218 provided for the dynamic chamber 213.

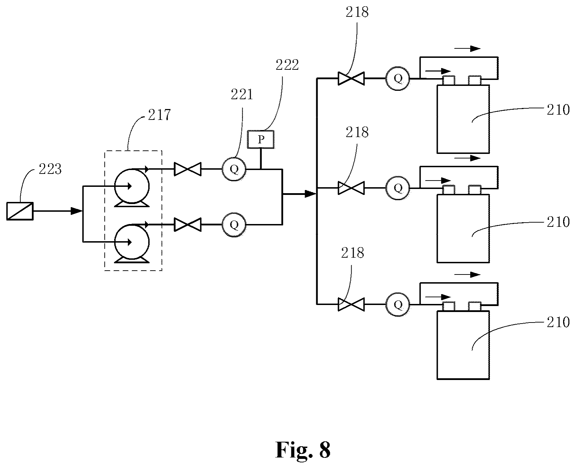

As shown in Fig. 8, this is, of course, an optional implementation. In some embodiments, each floating body 210 may share a single compressor 217, where a compressed gas source for the compressor 217 may be directly acquired from the outside atmosphere. To ensure a quality of an air source of a circulating system, an air filter 223 may be installed at an inlet of the compressor 217. The air entering the system is first pressurized by the compressor 217, then flows through an outlet air valve, and through a flow meter 221 and a pressure gauge 222 for monitoring and feedback. Subsequently, the air is supplied to each branch as needed based on a positional requirement of a posture adjustment device of the wind turbine foundation 200 for each floating body 210. A required flow rate of high-pressure gas within the dynamic chamber 213 of each floating body 210 is distributed and adjusted by controlling the opening, closing, and opening degree of the second control valve 218 corresponding to each floating body 210. The flow rate of the high-pressure gas source in each branch can be monitored and feedback-controlled by using the flow meter 221 arranged in each branch.

In some optional embodiments, in the wind turbine foundation 200 provided in the embodiments of the present application, each floating body 210 may be a cylindrical structure, and the first opening 214 may be arranged on a bottom wall of each floating body 210 that contacts the seawater 219 in its own axial direction, which is beneficial to the entry and discharge of the seawater 219 and ensures posture adjustment requirements.

Optionally, a number of the first openings 214 included in each floating body 210 may be one, or of course, may be two or more. When there are two or more, the two or more first openings 214 are arranged at intervals and uniformly on a periphery of each floating body 210, and the first control valve may be provided in each first opening 214.

In some optional embodiments, the wind turbine foundation 200 provided in the embodiments of the present application further includes an inclination angle sensor (not shown), which is arranged on one of the floating bodies 210 and the connecting bodies 210. The inclination angle sensor is configured to acquire an inclination angle, relative to a reference plane, of a whole structure formed by each of the floating bodies 210 and the connecting bodies 220.

The inclination angle sensor may be provided on the floating bodies 210, or may be provided on the connecting bodies 220.

The reference plane may be a horizontal plane, or a preset plane that is at a certain angle to the horizontal plane.

The wind turbine foundation 200 provided in the embodiments of the present application, by providing the inclination angle sensor, is capable of detecting the inclination angle, relative to the reference plane, of the whole structure formed by each of the floating bodies 210 and the connecting bodies 220. This is beneficial for determining one or more floating bodies 210 that need to be adjusted and the adjustment method based on an inclination angle and a direction of incoming wind, thereby facilitating the posture adjustment of the wind turbine foundation 200.

The wind turbine generator system provided in the embodiments of the present application includes the wind turbine foundation 200 provided in the above embodiments, which can ensure the support requirements for the wind turbine body 100. At the same time, each of the floating bodies 210 includes a static chamber 211 and a dynamic chamber 213 that are independently arranged, and a first medium 212 is arranged within the static chamber 211. Each of the floating bodies 210 is provided with a first opening 214 connected to the dynamic chamber 213 and a first control valve 215. Under a condition that it is necessary to adjust a displacement of any floating body 210 among the plurality of floating bodies 210, the first opening 214 can be directly controlled to be open through the first control valve 215 to adjust a volume of seawater 219 in the dynamic chamber 213 of the floating body 210. This can quickly change a weight of a single floating body 210 and a displacement of the entire wind turbine foundation 200, so as to quickly respond to influences of wind loads, wave loads, ocean current loads, ice loads, etc. On the basis of ensuring the overall stability of the wind turbine generator system, this ensures that the overall response speed of the wind turbine foundation 200 is fast, and a change of the displacement of the wind turbine foundation 200 can adapt to the influences of different external factors, resulting in a good stability effect.

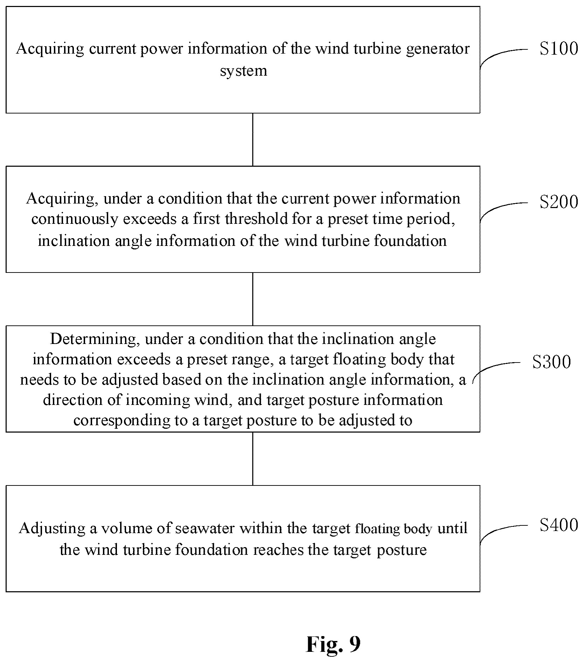

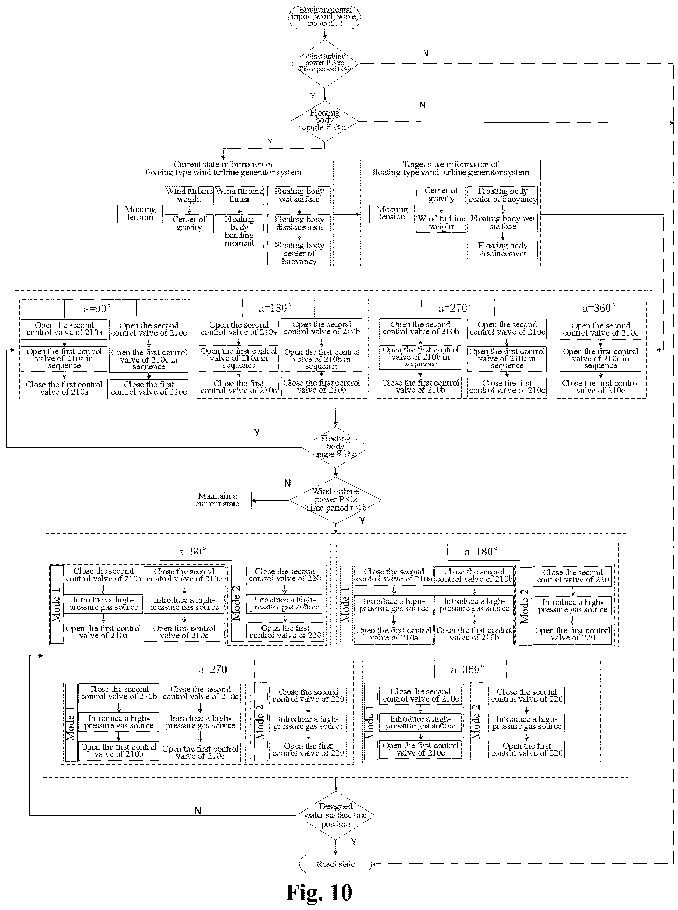

As shown in Fig. 9 and Fig. 10, on the other hand, the embodiments of the present application further provide a control method for a wind turbine generator system, which can be used for the wind turbine generator system provided in the above embodiments. The control method includes:

S 100: acquiring current power information *P* of the wind turbine generator system.
S200: acquiring, under a condition that the current power information continuously exceeds a first threshold *m* for a preset time period, inclination angle information of the wind turbine foundation 200.
S300: determining, under a condition that the inclination angle information exceeds a preset range, a target floating body that needs to be adjusted based on the inclination angle information, a direction of incoming wind, and target posture information corresponding to a target posture to be adjusted to.
S400: adjusting a volume of seawater 219 within the target floating body until the wind turbine foundation 200 reaches the target posture.

In step S 100, the current power information of the wind turbine generator system may be directly acquired through its master controller, or may be obtained by calculation based on its current rotation speed.
In step S200, the preset time period and the first threshold may be set according to an area where the wind turbine generator system is located and a safety level requirement. For example, a value of the preset time period *t* may be *t* = 20 min, and the first threshold *m* may be 3000 kw. Of course, the above is only an example given based on a model and safety level requirement, and is not limited to the above form.
In step S300, a posture of an offshore wind turbine generator system is closely related to incoming wind and waves. The incoming wind is taken as an example to describe different states of the impeller of the wind turbine generator system. Combined with a shape of the wind turbine foundation and a state of the impeller of the wind turbine generator system, a motion posture of the impeller may be defined as four directions. Different directions determine a direction of a thrust and are strongly related to a posture of the wind turbine foundation 200. Therefore, the target floating body that needs to be adjusted may be determined based on the inclination angle information, the direction of incoming wind, and the target posture information corresponding to the target posture to be adjusted to. A number of the target floating bodies may be one, two, three or even more, and the target posture may be a horizontal posture or may be a posture in a predetermined angle with the horizontal posture.
For example, a current state of the floating-type wind turbine generator system may be first acquired through information of the wind turbine generator system, such as mooring tension, gravity, floating body bending moment, and center of buoyancy information. Based on this input, theoretical calculation may be performed to obtain the target posture information, that is, corresponding center of gravity position and center of buoyancy position. Adjustment of the two centers may be achieved through a motion system of a single floating body 210 or multiple floating bodies 210, and an input to be implemented needs to be combined with an impeller orientation state.
In step S400, adjusting the volume of the seawater 219 in the target floating body may be done by increasing the volume of the seawater 219 in the target floating body, or by reducing the volume of the seawater 219 in the target floating body, as long as the wind turbine foundation can reach the target posture.
The control method for the wind turbine generator system provided in the embodiments of the present application is set through the above steps, so that the wind turbine generator system maintains an optimal output posture of the wind turbine generator system when dealing with complex and uncertain external loads and its own different operating conditions, thereby ensuring the output of the wind turbine generator system.
In some optional embodiments, with respect to the control method provided in the embodiments of the present application, the inclination angle information includes an inclination angle $\theta$ of the wind turbine foundation 200 relative to a preset reference plane.
The step S300 may include:

determining, under a condition that the inclination angle $\theta$ of the wind turbine foundation 200 relative to the preset reference plane is greater than a second threshold *c*, and an included angle *a* between the direction of incoming wind and a reference wind direction is in a range of $0° < a \leq 180°$, at least one of two floating bodies 210 adjacent to the floating body 210 where the tower 10 is located as the target floating body to be adjusted;
determining, under a condition that the inclination angle $\theta$ of the wind turbine foundation 200 relative to the preset reference plane is greater than the second threshold c, and the included angle *a* between the direction of incoming wind and the reference wind direction is in a range of $180° < a \leq 360°$, at least one of the floating body 210 where the tower 10 is located and one of the floating bodies 210 adjacent to the floating body 210 where the tower 10 is located as the target floating body.

The control method provided in the embodiments of the present application, through the above arrangement, can determine the target floating body according to a value of the included angle *a* between the direction of incoming wind and the reference wind direction, which is beneficial to the determination of the target floating body and ensures that the wind turbine foundation 200 is adjusted according to the incoming wind and the target posture.

In some optional embodiments, in the control method provided in the embodiments of the present application, the wind turbine foundation 200 includes three floating bodies 210.

The step of determining, under a condition that the inclination angle of the wind turbine foundation 200 relative to the preset reference plane is greater than a second threshold *c*, and an included angle *a* between the direction of incoming wind and a reference wind direction is in a range of $0° < a \leq 180°$, at least one of two floating bodies 210 adjacent to the floating body 210 where the tower 10 is located as the target floating body to be adjusted includes:

determining, under a condition that the inclination angle of the wind turbine foundation 200 relative to the preset reference plane is greater than the second threshold, and the included angle *a* between the direction of incoming wind and the reference wind direction is 180°, one of the two floating bodies 210 adjacent to the floating body 210 where the tower 10 is located as the target floating body;

determining, under a condition that the inclination angle $\theta$ of the wind turbine foundation 200 relative to the preset reference plane is greater than the second threshold, and the included angle *a* between the direction of incoming wind and the reference wind direction is in a range of $0° < a < 180°$, both of the two floating bodies 210 adjacent to the floating body 210 where the tower 10 is located as the target floating bodies.

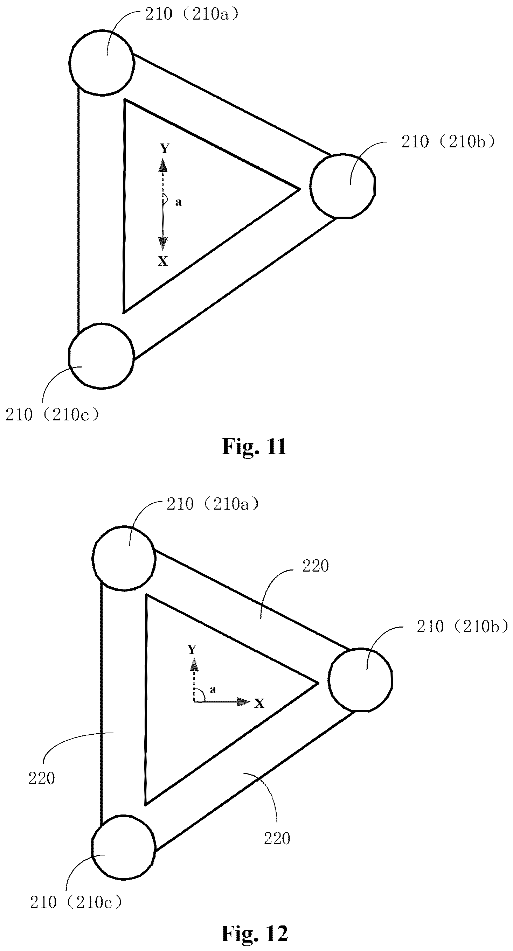

As shown in Fig. 11, taking three floating bodies 210, namely a first floating body 210a, a second floating body 210b, and a third floating body 210c, as an example, the second floating body 210b is configured to connect with the wind turbine foundation 200. The reference wind direction Y is the vertically upward direction in the figures. Under a condition that the included angle *a* between the direction X of incoming wind and the reference wind direction Y is 180°, it is necessary to adjust motion of the first floating body 210a. The second control valve 218 connected to the gas pipe 216 at the top of the first floating body 210a is opened. Then, the first control valve 215 of the first floating body 210a is opened in sequence to allow the seawater 219 to enter the first floating body 210a, until the wind turbine foundation 200 as a whole reaches the target posture, such as a leveling posture, or the inclination angle information of the wind turbine foundation 200 is adjusted to the preset range. Then, the first control valve 215 may be closed.

As shown in Fig. 12, under a condition that the included angle *a* between the direction X of incoming wind and the reference wind direction Y is 90°, it is necessary to adjust motion of the first floating body 210a and the third floating body 210c. The second control valve 218 connected to the gas pipe 216 at the top of the first floating body 210a and the second control valve 218 connected to the gas pipe 216 at the top of the third floating body 210c are opened. Then, the first control valve 215 of the first floating body 210a and the first control valve 215 of the third floating body 210c are opened to allow the seawater 219 to enter the first floating body 210a and the third floating body 210c, until the wind turbine foundation 200 as a whole reaches the target posture, such as a leveling posture, or the inclination angle information of the wind turbine foundation 200 is adjusted to the preset range. Then, the first control valves 215 may be closed.

The above two postures are examples. When *a* satisfies any other angle in a range of $0° < a < 180°$, the first floating body 210a and the third floating body 210c may be determined as the target floating bodies. By adding seawater 219 to a dynamic ballast tank of both, the incoming wind can be resisted and a probability of surge, sway, heave, roll, pitch, and yaw can be reduced.

The control method provided in the embodiments of the present application, through the above arrangement, enables a target floating body to be accurately determined, under a condition that the number of the floating bodies 210 is three, and a value of the angle *a* between the direction X of incoming wind and the reference wind direction is in a range of $0° < a < 180°$. By adjusting a volume of the target floating body, the wind turbine foundation 200 can always be close to a horizontal posture or a target posture, thereby enabling the wind turbine generator system to capture wind energy at an optimal wind-facing angle as much as possible under different operating conditions.

In some optional embodiments, in the control method provided in the embodiments of the present application, the wind turbine foundation 200 includes three floating bodies 210.

The step of determining, under a condition that the inclination angle of the wind turbine foundation 200 relative to the preset reference plane is greater than the second threshold, and the included angle *a* between the direction of incoming wind and the reference wind direction is in a range of $180° < a \leq 360°$, at least one of the floating body 210 where the tower 10 is located and one of the floating bodies 210 adjacent to the floating body 210 where the tower 10 is located as the target floating body includes:

determining, under a condition that the inclination angle of the wind turbine foundation 200 relative to the preset reference plane is greater than the second threshold, and the included angle *a* between the direction of incoming wind and the reference wind direction is 270°, the floating body 210 where the tower 10 is located as the target floating body to be adjusted;

determining, under a condition that the inclination angle of the wind turbine foundation 200 relative to the preset reference plane is greater than the second threshold, and the included angle *a* between the direction of incoming wind and the reference wind direction is 360°, one of the floating bodies 210 adjacent to the floating body 210 where the tower 10 is located as the target floating body to be adjusted;

determining, under a condition that the inclination angle $\theta$ of the wind turbine foundation 200 relative to the preset reference plane is greater than the second threshold, and the included angle *a* between the direction of incoming wind and the reference wind direction is in a range of 180°<*a*<270° or 270°<*a*<360°, the floating body 210 where the tower 10 is located and one of the floating bodies 210 adjacent to the floating body 210 where the tower 10 is located as the target floating bodies.

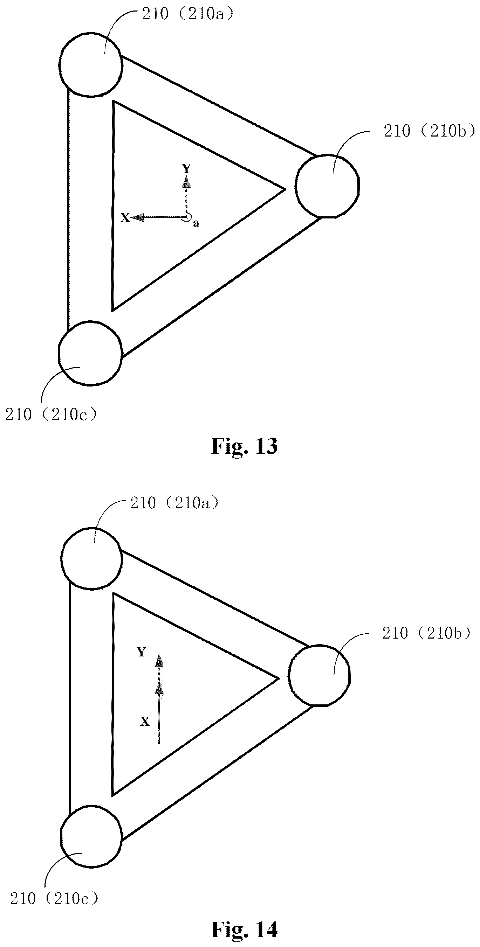

As shown in Fig. 13, taking three floating bodies 210, namely the first floating body 210a, the second floating body 210b, and the third floating body 210c, as an example, the second floating body 210b is configured to connect with the wind turbine foundation 200. The reference wind direction Y is the vertically upward direction in the figures. Under a condition that the included angle *a* between the direction X of incoming wind and the reference wind direction Y is 270°, it is necessary to adjust motion of the second floating body 210b connected with the tower 10. The second control valve 218 connected to the gas pipe 216 at the top of the second floating body 210b is opened. Then, the first control valve 215 of the second floating body 210b is opened in sequence to allow the seawater 219 to enter the second floating body 210b, until the wind turbine foundation as a whole reaches the target posture, such as a leveling posture, or the inclination angle information of the wind turbine foundation 200 is adjusted to the preset range. Then, the first control valve 215 may be closed.

As shown in Fig. 14, under a condition that the included angle *a* between the direction X of incoming wind and the reference wind direction Y is 360°, it is necessary to adjust motion of the third floating body 210c. The second control valve 218 connected to the gas pipe 216 at the top of the third floating body 210c is opened. Then, the first control valve 215 of the third floating body 210c is opened in sequence to allow the seawater 219 to enter the third floating body 210c, until the wind turbine foundation as a whole reaches the target posture, such as a leveling posture, or the inclination angle information of the wind turbine foundation 200 is adjusted to the preset range. Then, the first control valve 215 may be closed.

The control method provided in the embodiments of the present application, through the above arrangement, also enables a target floating body to be accurately determined, under a condition that the number of the floating bodies 210 is three, and a value of the angle *a* between the direction X of incoming wind and the reference wind direction is in a range of 180°<a≤360°. By adjusting a volume of the target floating body, the wind turbine foundation 200 can always be close to a horizontal posture or a target posture, thereby enabling the wind turbine generator system to capture wind energy at an optimal wind-facing angle as much as possible under different operating conditions.

It can be understood that the above embodiments of the present application use *a* = 90°, *a* = 180°, *a* = 270° and *a* = 360° as specific examples. When *a* is between any two of the above nodes, posture adjustment can also be achieved by combining corresponding column operation responses in the two states. For example, under a condition that the impeller is in an orientation between a=180° and a=270°, it can be achieved through coordinated motion of the first floating body 210a and the second floating body 210b until the wind turbine foundation 200 reaches the target posture, such as a leveling posture, or the inclination angle information of the wind turbine foundation 200 is adjusted to the preset range.

In some optional embodiments, with respect to the control method provided in the embodiments of the present application, the adjusting the volume of seawater 219 within the target floating body includes: pressing the seawater 219 into the target floating body through the first opening 214 and discharging the seawater 219 into a sea area to adjust an overall displacement of the wind turbine foundation 200.

Through the above arrangement, the overall displacement of the wind turbine foundation 200 can be changed to adapt to the incoming wind, which is beneficial to the adjustment of the posture of the wind turbine foundation 200.

In some optional embodiments, in the control method provided in the embodiments of the present application, after the step of adjusting a volume of seawater 219 within the target floating body until the wind turbine foundation 200 reaches the target posture, the control method further includes: acquiring current power information of the wind turbine generator system; adjusting, under a condition that the current power information is continuously less than the first threshold for a preset time period, the volume of seawater 219 within the target floating body to restore to an initial state.

The initial state may be understood as a previous state before the inclination angle information exceeds the preset range, that is, a state when the volume of the seawater 219 is not added or reduced in the dynamic chamber 213 of the floating body 210.

As shown in Fig. 11, for example, taking three floating bodies 210, namely the first floating body 210a, the second floating body 210b, and the third floating body 210c, as an example, the second floating body 210b is configured to connect with the wind turbine foundation 200. The reference wind direction is the vertically upward direction in the figures. Under a condition that the included angle *a* between the direction X of incoming wind and the reference wind direction Y is 180°, when restoring the initial state, it is necessary to adjust motion of the first floating body 210a. The second control valve 218 at the top of the first floating body 210a needs to be closed first. Then, a high-pressure gas source can be introduced into the dynamic chambers 213 of the first floating body 210a. Under a condition that a pressure value approaches an input high-pressure gas source pressure, the first control valves 215 of the first floating body 210a is opened in sequence, and seawater flows out, until the first floating body 210a returns to a designed water surface line position, thereby allowing the wind turbine generator system to enter a reset state. For Figs. 12 to 14, adjustment methods are similar to the above adjustment method. That is, under a condition that the current power information is continuously less than the first threshold for the preset time period, the seawater 219 previously added to the target floating body is discharged to restore it to the initial state, so that the wind turbine generator system always maintains a relatively optimal power generation state.

Through the above arrangement, after the incoming wind changes direction or an intensity of the incoming wind decreases, the wind turbine foundation will not tilt due to the increased seawater, thereby ensuring a power generation efficiency of the wind turbine generator system.

It can be understood that the above embodiments of the present application are all illustrated by taking the number of the floating bodies 210 as three. This is only for the purpose of better understanding the examples given in the present application. In some embodiments, the number of the floating bodies 210 may be four or five, and lines connecting centers of the floating bodies 210 form a quadrilateral or a pentagon. The target floating body can also be determined according to the direction of incoming wind, a current posture information and the target posture information corresponding to a target posture to be adjusted to. Taking four as an example, according to different incoming wind directions, at least two of the floating bodies 210 may be determined as target floating bodies to resist tipping of the wind turbine generator system in the direction of incoming wind, so as to reduce a probability of occurrence of phenomena such as surge, sway, heave, roll, pitch, and yaw, so that the wind turbine foundation 200 can reach the target posture, such as the leveling posture, or the inclination angle information of the wind turbine foundation 200 is adjusted to the preset range. The present application will not list them one by one.

In some optional embodiments, the wind turbine generator system provided in the embodiments of the present application may further include a controller, which is configured to: acquire current power information of the wind turbine generator system; acquire, under a condition that the current power information continuously exceeds a first threshold for a preset time period, inclination angle information of the wind turbine foundation 200; determine, under a condition that the inclination angle information exceeds a preset range, a target floating body that needs to be adjusted based on the inclination angle information, a direction of incoming wind, and target posture information corresponding to a target posture to be adjusted to; and adjust a volume of seawater 219 within the target floating body until the wind turbine foundation 200 reaches the target posture.

Optionally, the controller may be configured to execute the steps corresponding to the control methods provided in the above embodiments, which will not be described in detail here.

The controller of the wind turbine generator system provided in the embodiments of the present application may be a separately arranged control cabinet, or may be integrated into a master controller of the wind turbine generator system.

The wind turbine generator system provided in the embodiments of the present application can be used to execute the control methods provided in the above embodiments by arranging the controller, which is beneficial to the control of the wind turbine foundation 200, so that it can adjust a volume of seawater 219 in the dynamic chamber 213 of a corresponding float body 210 according to a direction of incoming wind, a current posture and a target posture, thereby ensuring the overall power generation efficiency of the wind turbine generator system.

Although the present application has been described with reference to preferred embodiments, various modifications may be made thereto and components may be substituted with equivalents without departing from the scope of the present application. In particular, various technical features described in various embodiments may be combined in any manner as long as there are no structural conflicts. The present application is not limited to the specific embodiments disclosed herein, but encompasses all technical solutions falling within the scope of the claims.

## Claims

**1.** A wind turbine foundation, capable of being arranged in seawater and configured to support a tower, wherein the wind turbine foundation comprises:

floating bodies, wherein a number of the floating bodies is n, the floating bodies are arranged at intervals from each other, and lines connecting centers of the floating bodies form a polygon as a whole, where $n \geq 3$;
connecting bodies, wherein a corresponding one of the connecting bodies is connected between every two adjacent floating bodies;
wherein each of the floating bodies has a static chamber and a dynamic chamber that are independently arranged, a first medium is enclosed within the static chamber, each of the floating bodies is provided with a first opening connected to the dynamic chamber and a first control valve, and the first control valve controls opening and closing of the first opening to adjust a volume of the seawater entering the dynamic chamber.

2. The wind turbine foundation according to claim 1, wherein one of the static chamber and the dynamic chamber is arranged around the other.

3. The wind turbine foundation according to claim 2, wherein one of the dynamic chamber and the static chamber is an annular chamber and the other is a columnar chamber, and the dynamic chamber and the static chamber are arranged coaxially with each other.

4. The wind turbine foundation according to any one of claims 1 to 3, wherein each of the floating bodies is in a shape of a hollow column as a whole, and the dynamic chamber and the static chamber are arranged alternately in a radial direction of each of the floating bodies.

5. The wind turbine foundation according to claim 4, wherein each of the floating bodies has two or more dynamic chambers, and the two or more dynamic chambers are all arranged around the static chamber and are independently distributed from each other.

6. The wind turbine foundation according to any one of claims 1 to 5, wherein the first medium comprises at least one of a solid medium and a liquid medium.

7. The wind turbine foundation according to any one of claims 1 to 6, further comprising: a compressor and a gas pipe connected to the compressor, wherein the dynamic chamber of each of the floating bodies is connected to the gas pipe.

8. The wind turbine foundation according to claim 7, wherein a second control valve is arranged between the dynamic chamber and the compressor to adjust a flow rate of gas entering each of the dynamic chamber.

9. The wind turbine foundation according to any one of claims 1 to 8, further comprising: an inclination angle sensor, arranged on at least one of the floating bodies and the connecting bodies, and configured to acquire an inclination angle, relative to a reference plane, of a whole structure formed by each of the floating bodies and the connecting bodies.

10. A wind turbine generator system, comprising:

the wind turbine foundation according to any one of claims 1 to 9;
a wind turbine main body arranged on one of the floating bodies, wherein the wind turbine main body comprises the tower connected to the floating body, a nacelle arranged on the tower, and an impeller arranged on the nacelle.

11. The wind turbine generator system according to claim 10, further comprising a controller, configured to:

acquire current power information of the wind turbine generator system;
acquire, under a condition that the current power information continuously exceeds a first threshold for a preset time period, inclination angle information of the wind turbine foundation;
determine, under a condition that the inclination angle information exceeds a preset range, a target floating body that needs to be adjusted based on the inclination angle information, a direction of incoming wind, and target posture information corresponding to a target posture to be adjusted to; and
adjust a volume of seawater within the target floating body until the wind turbine foundation reaches the target posture.

12. A control method for a wind turbine generator system according to claim 10 or 11, comprising:

acquiring current power information of the wind turbine generator system;
acquiring, under a condition that the current power information continuously exceeds a first threshold for a preset time period, inclination angle information of the wind turbine foundation;
determining, under a condition that the inclination angle information exceeds a preset range, a target floating body that needs to be adjusted based on the inclination angle information, a direction of incoming wind, and target posture information corresponding to a target posture to be adjusted to; and
adjusting a volume of seawater within the target floating body until the wind turbine foundation reaches the target posture.

**13.** The control method according to claim 12, wherein the inclination angle information comprises an inclination angle of the wind turbine foundation relative to a preset reference plane;
the step of determining, under a condition that the inclination angle information exceeds a preset range, a target floating body that needs to be adjusted based on the inclination angle information, a direction of incoming wind, and target posture information corresponding to a target posture to be adjusted to comprises:

determining, under a condition that the inclination angle of the wind turbine foundation relative to the preset reference plane is greater than a second threshold, and an included angle *a* between the direction of incoming wind and a reference wind direction is in a range of $0° < a \leq 180°$, at least one of two floating bodies adjacent to the floating body where the tower is located as the target floating body to be adjusted; and
determining, under a condition that the inclination angle of the wind turbine foundation relative to the preset reference plane is greater than the second threshold, and the included angle *a* between the direction of incoming wind and the reference wind direction is $180° < a \leq 360°$, at least one of the floating body where the tower is located and one of the floating bodies adjacent to the floating body where the tower is located as the target floating body.

**14.** The control method according to claim 13, wherein the wind turbine foundation comprises three floating bodies;
the step of determining, under a condition that the inclination angle of the wind turbine foundation relative to the preset reference plane is greater than a second threshold, and an included angle *a* between the direction of incoming wind and a reference wind direction is in a range of $0° < a \leq 180°$, at least one of two floating bodies adjacent to the floating body where the tower is located as the target floating body to be adjusted comprises:

determining, under a condition that the inclination angle of the wind turbine foundation relative to the preset reference plane is greater than the second threshold, and the included angle *a* between the direction of incoming wind and the reference wind direction is 180°, one of the two floating bodies adjacent to the floating body where the tower is located as the target floating body;
determining, under a condition that the inclination angle of the wind turbine foundation relative to the preset reference plane is greater than the second threshold, and the included angle *a* between the direction of incoming wind and the reference wind direction is in a range of $0° < a < 180°$, both of the two floating bodies adjacent to the floating body where the tower is located as the target floating bodies.

**15.** The control method according to claim 13, wherein the wind turbine foundation comprises three floating bodies;
the step of determining, under a condition that the inclination angle of the wind turbine foundation relative to the preset reference plane is greater than the second threshold, and the included angle *a* between the direction of incoming wind and the reference wind direction is $180° < a \leq 360°$, at least one of the floating body where the tower is located and one of the floating bodies adjacent to the floating body where the tower is located as the target floating body comprises:

determining, under a condition that the inclination angle of the wind turbine foundation relative to the preset reference plane is greater than the second threshold, and the included angle *a* between the direction of incoming wind and the reference wind direction is 270°, the floating body where the tower is located as the target floating body;
determining, under a condition that the inclination angle of the wind turbine foundation relative to the preset reference plane is greater than the second threshold, and the included angle *a* between the direction of incoming wind and the reference wind direction is 360°, one of the floating bodies adjacent to the floating body where the tower is located as the target floating body;
determining, under a condition that the inclination angle of the wind turbine foundation relative to the preset reference plane is greater than the second threshold, and the included angle *a* between the direction of incoming wind and the reference wind direction is in a range of $180° < a < 270°$ or $270° < a < 360°$, the floating body where the tower is located and one of the floating bodies adjacent to the floating body where the tower is located as the target floating bodies.

**16.** The control method according to claim 12, wherein the adjusting the volume of seawater within the target floating body comprises:
pressing the seawater into the target floating body through the first opening and discharging the seawater into a sea area to adjust an overall displacement of the wind turbine foundation.

**17.** The control method according to claim 12, wherein after the step of adjusting a volume of seawater within the target floating body until the wind turbine foundation reaches the target posture, the control method further comprises:

acquiring current power information of the wind turbine generator system;
adjusting, under a condition that the current power information is continuously less than the first threshold for a preset time period, the volume of seawater within the target floating body to restore to an initial state.

42
40
41
30
20
10
100
20
30
40
10
210
200
210
219
50
60

Fig. 1

z
Yaw
Heave
200
Sway
y
Pitch
Surge
Roll
x

Fig. 2

210
220
210
220
220
210

Fig. 3

213
211
218
216
219
A
A
214
W
212
215

Fig. 4

A-A
214
212
214
211

Fig. 5

218
218
211
216
213
213
214
212
214
B
B
215
215
W

Fig. 6

B-B
211
213
213
214
214
W

Fig. 7

218
222
221
217
223
P
Q
Q
Q
218
Q
218
Q
210
210
210

Fig. 8

Acquiring current power information of the wind turbine generator system
S100
Acquiring, under a condition that the current power information continuously exceeds a first threshold for a preset time period, inclination angle information of the wind turbine foundation
S200
Determining, under a condition that the inclination angle information exceeds a preset range, a target floating body that needs to be adjusted based on the inclination angle information, a direction of incoming wind, and target posture information corresponding to a target posture to be adjusted to
S300
Adjusting a volume of seawater within the target floating body until the wind turbine foundation reaches the target posture
S400

**Fig. 9**

Environmental input (wind, wave, current...)
Wind turbine power P≥m Time period t≥b
N
Y
Floating body angle θ ≥c
N
Y
Current state information of floating-type wind turbine generator system
Mooring tension
Wind turbine weight
Wind turbine thrust
Floating body wet surface
Center of gravity
Floating body bending moment
Floating body displacement
Floating body center of buoyancy
Target state information of floating-type wind turbine generator system
Mooring tension
Center of gravity
Floating body center of buoyancy
Wind turbine weight
Floating body wet surface
Floating body displacement
a=90°
Open the second control valve of 210a
Open the second control valve of 210c
Open the first control valve of 210a in sequence
Open the first control valve of 210c in sequence
Close the first control valve of 210a
Close the first control valve of 210c
a=180°
Open the second control valve of 210a
Open the second control valve of 210b
Open the first control valve of 210a in sequence
Open the first control valve of 210b in sequence
Close the first control valve of 210a
Close the first control valve of 210b
a=270°
Open the second control valve of 210b
Open the second control valve of 210c
Open the first control valve of 210b in sequence
Open the first control valve of 210c in sequence
Close the first control valve of 210b
Close the first control valve of 210c
a=360°
Open the second control valve of 210c
Open the first control valve of 210c in sequence
Close the first control valve of 210c
Y
Floating body angle θ ≥c
N
Maintain a current state
Wind turbine power P<a Time period t<b
Y
a=90°
Mode 1
Close the second control valve of 210a
Close the second control valve of 210c
Introduce a high-pressure gas source
Introduce a high-pressure gas source
Open the first control valve of 210a
Open first control valve of 210c
Mode 2
Close the second control valve of 220
Introduce a high-pressure gas source
Open the first control valve of 220
a=180°
Mode 1
Close the second control valve of 210a
Close the second control valve of 210b
Introduce a high-pressure gas source
Introduce a high-pressure gas source
Open the first control valve of 210a
Open the first control valve of 210b
Mode 2
Close the second control valve of 220
Introduce a high-pressure gas source
Open the first control valve of 220
a=270°
Mode 1
Close the second control valve of 210b
Close the second control valve of 210c
Introduce a high-pressure gas source
Introduce a high-pressure gas source
Open the first control valve of 210b
Open the first control valve of 210c
Mode 2
Close the second control valve of 220
Introduce a high-pressure gas source
Open the first control valve of 220
a=360°
Mode 1
Close the second control valve of 210c
Introduce a high-pressure gas source
Open the first control valve of 210c
Mode 2
Close the second control valve of 220
Introduce a high-pressure gas source
Open the first control valve of 220
N
Designed water surface line position
Y
Reset state


**Fig. 10**

210（210a）
210（210b）
Y
a
X
210（210c）

Fig. 11

210（210a）
220
210（210b）
Y
a
X
220
220
210（210c）

Fig. 12

210（210a）
210（210b）
Y
X
a
210（210c）


Fig. 13

210（210a）
210（210b）
Y
X
210（210c）


Fig. 14

## INTERNATIONAL SEARCH REPORT

International application No.
**PCT/CN2023/140342**

**A. CLASSIFICATION OF SUBJECT MATTER**

F03D13/20(2016.01)i

According to International Patent Classification (IPC) or to both national classification and IPC

**B. FIELDS SEARCHED**

Minimum documentation searched (classification system followed by classification symbols)

IPC:F03D B63B

Documentation searched other than minimum documentation to the extent that such documents are included in the fields searched

Electronic data base consulted during the international search (name of data base and, where practicable, search terms used)

CNTXT, ENTXTC, WPABSC, CNKI: 风力, 风电, 风机, 基础, 浮体, 浮筒, 静态, 动态, 压载, 阀, 压缩机, 倾斜角度. VEN, ENTXT, DWPI, WPABS: wind power, wind turbine, foundation, floating, buoy, static, dynamic, ballast, valve, compressor, tilt angle, inclination.

**C. DOCUMENTS CONSIDERED TO BE RELEVANT**

| Category* | Citation of document, with indication, where appropriate, of the relevant passages | Relevant to claim No. |
|---|---|---|
| PX | CN 116857126 A (GOLDWIND SCIENCE & TECHNOLOGY CO., LTD. et al.) 10 October 2023 (2023-10-10) description, paragraphs 60-157, and figures 1-14 | 1-17 |
| X | CN 113879474 A (SHANGHAI WISON MARINE ENGINEERING CO., LTD.) 04 January 2022 (2022-01-04) description, paragraphs 38-89, and figures 1-8 | 1-12, 16-17 |
| X | CN 113879475 A (SHANGHAI WISON MARINE ENGINEERING CO., LTD.) 04 January 2022 (2022-01-04) description, paragraphs 30-64, and figures 1-6 | 1-12, 16-17 |
| A | CN 114313125 A (SICHUAN HONGHUA PETROLEUM EQUIPMENT CO., LTD.) 12 April 2022 (2022-04-12) entire document | 1-17 |
| A | WO 2022248162 A1 (RWE RENEWABLES GMBH) 01 December 2022 (2022-12-01) entire document | 1-17 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **29 March 2024** | **02 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2023/140342

C. DOCUMENTS CONSIDERED TO BE RELEVANT

| Category* | Citation of document, with indication, where appropriate, of the relevant passages | Relevant to claim No. |
|---|---|---|
| A | WO 2018095304 A1 (HARBIN INSTITUTE OF TECHNOLOGY SHENZHEN GRADUATE SCHOOL) 31 May 2018 (2018-05-31) entire document | 1-17 |

Form PCT/ISA/210 (second sheet) (July 2022)

**INTERNATIONAL SEARCH REPORT**
**Information on patent family members**

International application No.
**PCT/CN2023/140342**

| Patent document cited in search report | Publication date (day/month/year) | Patent family member(s) | Publication date (day/month/year) |
|---|---|---|---|
| CN 116857126 A | 10 October 2023 | None | |
| CN 113879474 A | 04 January 2022 | None | |
| CN 113879475 A | 04 January 2022 | CN 216443759 U | 06 May 2022 |
| CN 114313125 A | 12 April 2022 | CN 114313125 B | 13 June 2023 |
| WO 2022248162 A1 | 01 December 2022 | DE 102021113455 A1 | 01 December 2022 |
| WO 2018095304 A1 | 31 May 2018 | CN 107472474 A | 15 December 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310816270